# EUROPEAN PATENT APPLICATION

(11) **EP 1 652 725 A1**
(43) Date of publication of application: **03.05.2006**
(21) Application number: 05077462.9
(22) Date of filing: 26.10.2005
(51) Int. Cl.: B60P 1/02, B60P 1/64

(54) **A vehicle comprising a lifting mechanism as well as such a lifting mechanism**

(30) Priority: 26.10.2004 NL 1027346
(71) Applicant: Netras Mobile Systems B.V., 5708 HN Helmond (NL)
(72) Inventor: Van Weezel, Aard, 5421 AG Gemert (NL); Ries, Marten, 5642 EP Eindhoven (NL); Van Dooren, Michel Johannes Josephus, 5761 EM Bakel (NL); Baselmans, Edwin Jozefus Christiaan, 5658 HH Eindhoven (NL)
(74) Representative: Valkonet, Rutger

(57) **Abstract**

The invention relates to a U-shaped frame (2) arranged for receiving an object, which U-shaped frame is built up of two longitudinal frame members (2a-2b) and one transverse frame member (2c), which frame members jointly define a U-shaped space (9) that is open on one side, wherein the U-shaped frame (2) is provided with lifting mechanism for lifting the object, which lifting mechanism (5a,5b,5c) is built up of a front lifting unit (5c) mounted in the transverse frame member and two rear lifting units (5a,5b) mounted in each of the longitudinal frame members (2a,2b), said front and rear lifting units each comprising a movable lifting point (6) for engagement with a corresponding engagement point on the object.

The invention further relates to a vehicle comprising a U-shaped frame according to the invention.

According to the invention, the U-shaped frame (2) is characterized in that each front and rear lifting unit is arranged for moving each lifting (6) point along an imaginary straight line. This enables a more reliable manner of lifting and lowering an object, so that jamming of objects in the vehicle will no longer occur.

## Description

The invention relates to a U-shaped frame arranged for receiving an object, which U-shaped frame is built up of two longitudinal frame members and one transverse frame member, which frame members jointly define a U-shaped space that is open on one side, wherein the U-shaped frame is provided with lifting mechanism for lifting the object, which lifting mechanism is built up of a front lifting unit mounted in the transverse frame member and two rear lifting units mounted in each of the longitudinal frame members, said front and rear lifting units each comprising a movable lifting point for engagement with a corresponding engagement point on the object.

The invention further relates to a vehicle comprising a U-shaped frame according to the invention.

It is noted that within the context of the present application the object to be accommodated may be any spatial construction, for example a platform or a frame or a construction in the form of a transport container.

European patent publication No. 0 680 416 discloses a U-shaped frame as well as a vehicle comprising such a U-shaped frame as referred to in the introduction above. A technique for conveying transport containers by means of such a vehicle is proposed, wherein the transport container can be received in the U-shaped frame at the rear side of the vehicle, to be lifted by means of the lifting mechanism and transported by the vehicle. Likewise, the object can be lowered by the lifting mechanism and be disconnected from the vehicle.

Important drawbacks of the vehicle according to EP-0 680 416 are considered to be the construction and operation of the various lifting units. The lifting units, which jointly form the lifting mechanism, each have a lifting point that engages the object to be transported. The lifting unit in question imposes a movement on each lifting point so as to lift or lower the object.

Because of the construction of the lifting units, a circular movement is imposed on the lifting points, as a result of which also the object to be transported undergoes a rather unstable movement. This may result in the object moving out of square or jamming in the U-shaped frame, and thus lead to unsafe situations. Furthermore, the lifting units require a great deal of mounting space in view of their operation and construction, which makes the vehicle less user-friendly and manageable.

The object of the invention is to obviate the above drawbacks and to provide a U-shaped frame, or a vehicle comprising such a U-shaped frame, which is more user-friendly, which requires less mounting space but which, above all, is capable of transporting all kinds of objects in a simple and more reliable manner.

According to the invention, the U-shaped frame is characterized in that each front and rear lifting unit is arranged for moving each lifting point along an imaginary straight line. This enables a more reliable manner of lifting and lowering an object, so that jamming of objects in the vehicle will no longer occur.

More specifically, the imaginary straight line is a vertical line.

In a specific embodiment, each lifting point forms part of the lever linkage, wherein the lever linkage comprises a first lever having a first end and a second end.

Each lifting point may be located on or near the first end of each first lever, with the second end of each first lever being slidably accommodated in a guide present in the frame member. In this embodiment the guide that is present in the frame member extends in horizontal direction.

Furthermore, the lever linkage of this embodiment comprises a triangular element having a first, a second and a third corner point, wherein the triangular element is pivotally connected to the first lever with its first corner point and wherein the pivot point between the triangular element and the first lever is located between the first and the second end of the first lever.

More specifically, the first and the second end are spaced from the pivot point by an identical distance.

The triangular element may furthermore be pivotally connected to the frame member with its second corner point, with the triangular element being pivotally connected with its third corner point to an adjusting mechanism mounted in each of the frame members.

Because of the construction of the lever linkage that forms part of each lifting unit, a vertical movement is imposed on the object, as a result of which a simple lifting movement or lowering movement suffices for lifting and lowering the object. The movement of the object along a vertical straight line prevents the container from undesirably moving out of square, as occurs with the known systems, so that jamming (and the resulting damage) of the container in the vehicle is prevented.

A significant gain in mounting space is achieved by incorporating each lifting unit in the frame.

In another specific embodiment, the adjusting mechanism comprises an extension element for imposing a pivoting movement on the triangular element about the second corner point.

The adjusting mechanism may comprise a piston-cylinder combination.

In a specific embodiment, the lifting point is configured as a drivable hook element mounted to the first lever, which hook element can be positioned round a pin fixed to the object, which pin functions as an engagement point, so as to enable a quick connection and disconnection of the object as well as a reliable, permanent connection of the object during transport.

The invention will now be explained with reference to a drawing, in which:
Figures 1a-1d show various operating situations of a vehicle according to the invention provided with a transport container;
Figure 2 shows a first embodiment of a U-shaped frame according to the invention;
Figure 3 is a detail view of the U-shaped frame that is shown in figure 2;
Figure 4 is another detail view of the U-shaped frame of figure 2.

For a clear understanding of the invention, like parts will be indicated by the same numerals in the description of the figures below.

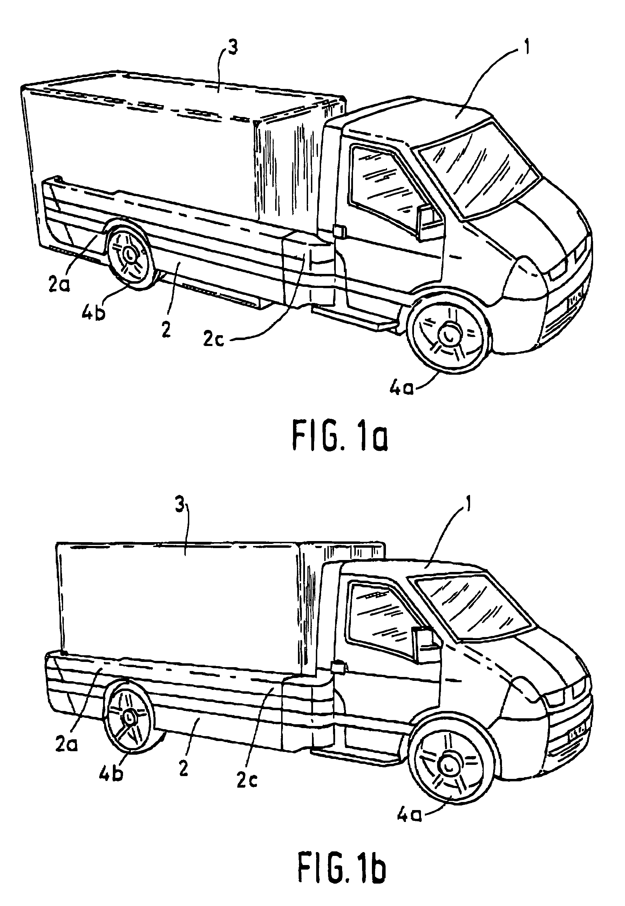

Figures 1a-1d show various operating situations of a vehicle 1 provided with a U-shaped frame 2 according to the invention. The U-shaped frame 2 is built up of two longitudinal frame members 2a-2b, of which frame members only the frame member 2a is shown in figure 1a. The two longitudinal frame members 2a and 2b are interconnected by means of a transverse frame member 2c, which is further connected to the chassis that supports the cabin of the vehicle 1.

The vehicle 1 is furthermore provided with two front wheels 4a that are driven by the engine, as well as with two rear wheels 4b, which are each mounted in the two longitudinal frame members 2a-2b. An object 3 having dimensions adapted to those of the U-shaped frame 2 can be received in the U-shaped space 9 formed by the U-shaped frame 2.

The object 3 may form any spatial construction, for example a platform or a frame or a transport container, as shown in the figures and in the description below.

In figure 1a, the transport container 3 is supported on the ground, it is moved into the open space 9 enclosed by the U-shaped frame 2 by manoeuvring the vehicle 1 rearwards.

Figure 1b shows the operating situation in which the transport container 3 has been lifted from the ground by suitable lifting means (not shown) and has been placed into the open space 9 of the U-shaped frame. It is known per se to provide the transport container 3 with suitable engagement points, which can mate with corresponding lifting points that form part of the lifting means.

The lifting means are built up of three lifting units, which are mounted in a longitudinal frame member 2a-2b and in the transverse frame member 2c, respectively. The three lifting units will be indicated 5a-5b-5c hereinafter. The lifting units 5a-5b are mounted in the respective longitudinal frame members 2a-2b, whilst the third lifting unit 5c is mounted in the transverse frame member 2c. The operating situation as shown in Figure 1b is usually the situation in which the transport container 3 is transported on public roads by means of the vehicle 1.

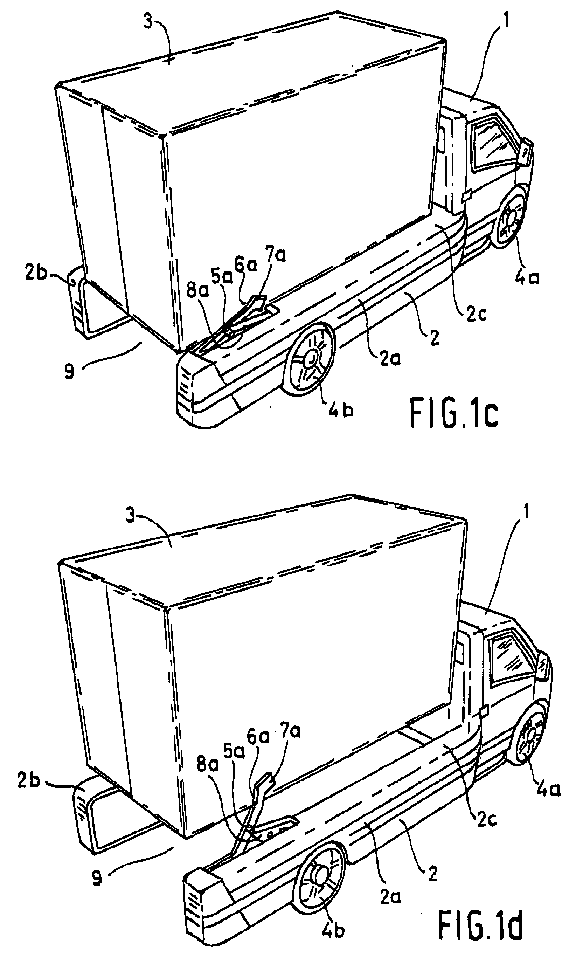

Figure 1c shows another operating situation, in which the transport container 3 is lifted by the lifting means, for example for moving the transport container 3 to a higher loading platform (not shown).

According to the invention, each lifting unit 5a-5b-5c is made up of a lever linkage, which will be explained in more detail yet hereinafter. The compact construction, which requires little mounting space, makes it possible to mount each lifting unit 5a-5b-6c in a suitable recess 8a-8b-8c in the longitudinal frame members 2a-2b and the transverse frame member 2c, respectively. The lifting units 5a-5b-5c are provided with suitable lifting points 6a-6b-6c, respectively, which are capable of engaging a respective corresponding engagement point 7a-7b-7c on the transport container.

Figure 1d shows yet another operating situation of the vehicle 1 provided with a U-shaped frame 2 according to the invention, in which the transport container 3 has been lifted to the highest position by means of the lifting units 5a-5b-5c. The open space 9 of the U-shaped frame is cleared thereby.

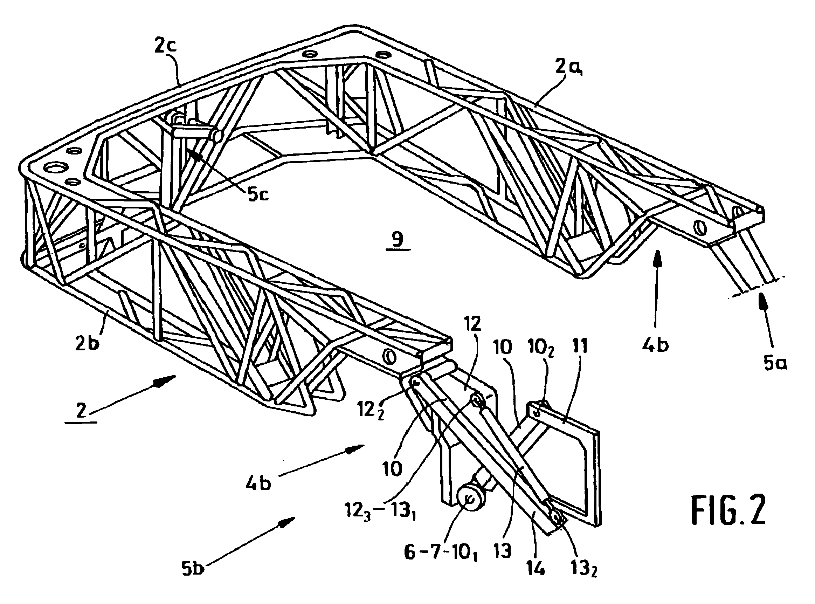

Figure 2 shows a detail view of the U-shaped frame 2, from which the chassis shown in figures 1a-1d has been left out for easy reference. As already noted before, the U-shaped frame 2 is built up of two longitudinal frame members 2a-2b, which are interconnected by means of a transverse frame member 2c. The frame members 2a-2b-2c comprise a tubular construction, which not only gives the construction the required strength but, in addition, ensures that the weight of the overall construction will be low.

The U-shaped frame 2 has an open side (opposite the transverse frame member 2c), so that a transport container 3 as shown in figures 1a-1d can be placed into the open space 9. The U-shaped frame 2 is provided with a lifting arrangement (lifting means) made up of three lifting units 5a-5b-5c. The lifting unit 5c is mounted in the centre of the transverse frame member 2c, whilst the lifting units 5a-5b are mounted in the longitudinal frame members 2a-2b, and that in such a manner that said lifting units 5a-5b are disposed behind the rear wheels 4b, seen in the direction of forward movement of the vehicle 1, in the frame members 2a-2b.

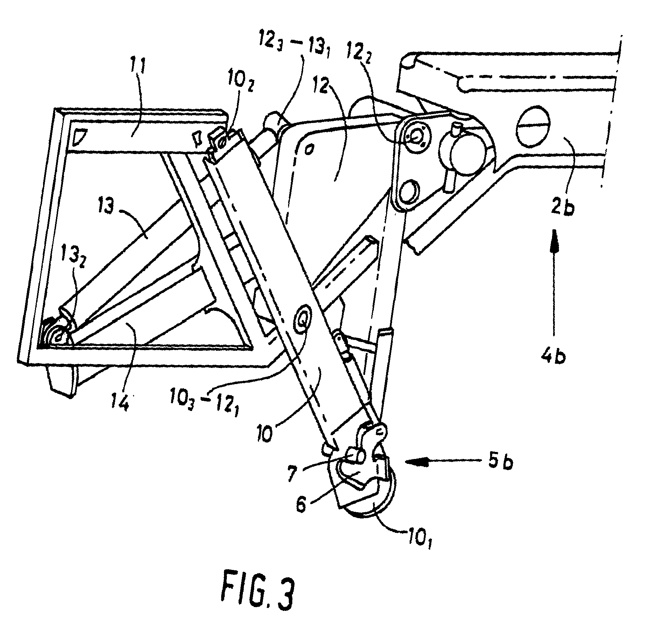

Also with reference to the detail view of figure 3, each lifting unit 5a-5b-5c comprises a lever linkage built up primarily of a first lever 10. The first lever 10 has a first end 10₁ and a second end 10₂, which first end 10₁ is provided with a lifting point 6 arranged to mate with an engagement point 7 that forms part of the transport container 3. The second end 10₂ of the first lever 10 is slidably accommodated in a guide 11 that forms part of the respective frame members 2a and 2b.

The second end 10₂ of the first lever 10 may to that end be provided with a projecting cam, which is slidably accommodated in the guide 11. To enable movement of the lever 10 in the frame member 2a-2b, the lifting unit 5a-5b-5c, which is configured as a lever linkage, comprises a triangular element 12 provided with three corner points 12₁-12₂-12₃. The triangular element 12 is pivotally connected with its first corner point 12₁ to the first lever 10, about the pivot point 10₃. Preferably, the pivot point 10₃ is located between the first end 10₁ and the second end 10₂ of the first lever 10, more in particular, the first and the second end 10₁ and 10₂, respectively, are spaced from the pivot point 10₃ by an identical distance.

The triangular element 12 is pivotally connected to the frame member 2a-2b-2c with its second corner point 12₂, whilst the third corner point 12₃ of the triangular element 12 is pivotally connected to the first end 13₁ of an adjusting mechanism 13, which is connected to the frame member 2a-2b-2c with its other end 13₂.

The adjusting mechanism 13 preferably comprises an extension element for imposing a pivoting movement about the second corner point 12₂ on the triangular element 12, and thus on the first lever 10. The extension element may comprise a spindle construction, for example, or a piston-cylinder a combination, which latter combination can be hydraulically or pneumatically operated.

During the pivoting movement of the triangular element 12 about the second corner point 12₂, a movement is imposed also on the first lever 10, in such a manner that the second end 10₂ of the lever 10 undergoes a horizontal movement in the guide 11 while simultaneously the lifting point 6 undergoes a linear movement in vertical direction relative to the frame member 2a-2b-2c.

As a result of the linear movement in vertical direction of the first end 10₁ and the lifting point present at that location, the transport container 3 is moved vertically upwards and, in a corresponding manner, downwards by means of the engagement points 7a-7b-7c thereof. The transport container 7 is thereby prevented from undesirably moving out of square and getting jammed in the U-shaped frame 2. The vertical movement of the transport container 3 enables a more user-friendly and, above all, simple and more reliable manner of transport. Since the lifting units 5a-5b-5c are made up of a lever linkage, little mounting space is required and the lifting units can be built into the frame members 2a-2b-2c in an ergonomically sound and reliable manner.

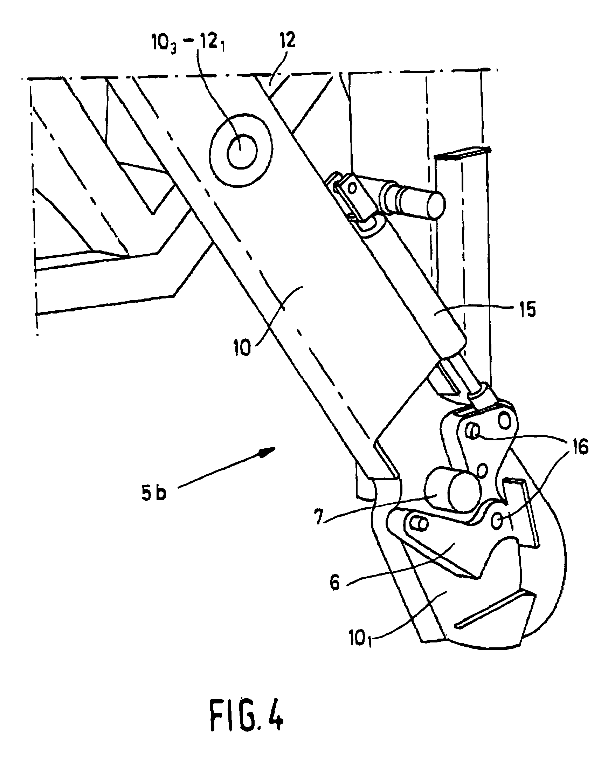

Figure 4 shows another detail view of the invention, in which the lifting point 6 is configured as a drivable hook-shaped element that is mounted to the first end 10₁ of the first lever 10 by means of pivot points 16. The hook-shaped element 6 can be operated by means of a suitable operating mechanism 15, for example a spindle or a piston-cylinder combination which, when driven, positions the hook-shaped element 6 round the engagement point 7. The engagement point 7 is configured as a projecting pin, which is fixed to the transport container at suitable positions. By positioning the hook shaped element 6 of each lifting unit 5a-5b-5c round the corresponding projecting engagement point 7, the transport container 3 can subsequently be lifted by the aforesaid three engagement points and be transported.

## Claims

1. A U-shaped frame arranged for receiving an object, which U-shaped frame is built up of two longitudinal frame members and one transverse frame member, which frame members jointly define a U-shaped space that is open on one side, wherein the U-shaped frame is provided with lifting mechanism for lifting the object, which lifting mechanism is built up of a front lifting unit mounted in the transverse frame member and two rear lifting units mounted in each of the longitudinal frame members, said front and rear lifting units each comprising a movable lifting point for engagement with a corresponding engagement point on the object, **characterized in that** each front and rear lifting unit is arranged for moving each lifting point along an imaginary straight line.

2. The U-shaped frame according to claim 1, **characterized in that** the imaginary straight line is a vertical line.

3. The U-shaped frame according to claim 1 or 2, **characterized in that** each lifting point forms part of the lever linkage, wherein the lever linkage comprises a first lever having a first end and a second end.

4. The U-shaped frame according to claim 3, **characterized in that** the lever linkage comprises a first lever having a first and a second end.

5. The U-shaped frame according to claim 4, **characterized in that** each lifting point is located on or near the first end of each first lever, with the second end of each first lever being slidably accommodated in a guide present in the frame member.

6. The U-shaped frame according to claim 5, **characterized in that** the guide that is present in the frame member extends in horizontal direction.

7. The U-shaped frame according to any one or more of the claims 4-6, **characterized in that** the lever linkage comprises a triangular element having a first, a second and a third corner point.

8. The U-shaped frame according to claim 7, **characterized in that** the triangular element is pivotally connected to the first lever with its first corner point.

9. The U-shaped frame according to claim 8, **characterized in that** the pivot point between the triangular element and the first lever is located between the first and the second end of the first lever.

10. The U-shaped frame according to claim 9, **characterized in that** the first and the second end are spaced from the pivot point by an identical distance.

11. The U-shaped frame according to any one or more of the claims 7-10, **characterized in that** the triangular element is pivotally connected to the frame member with its second corner point.

12. The U-shaped frame according to any one or more of the claims 7-11, **characterized in that** the triangular element is pivotally connected with its third corner point to an adjusting mechanism mounted in each of the frame members.

13. The U-shaped frame according to claim 12, **characterized in that** the adjusting mechanism comprises an extension element for imposing a pivoting movement on the triangular element about the second corner point.

14. The U-shaped frame according to claim 12 or 13, **characterized in that** the adjusting mechanism comprises a piston-cylinder combination.

15. The U-shaped frame according to any one or more of the preceding claims, **characterized in that** the lifting point is configured as a drivable hook element mounted to the first lever, which hook element can be positioned round a pin fixed to the object, which pin functions as an engagement point.

16. A vehicle provided with a U-shaped frame according to any one or more of the preceding claims, which is open at the rear side of the vehicle.
